# EUROPÄISCHE PATENTSCHRIFT

(11) **EP 2 594 532 B1**
(45) Veröffentlichungstag und Bekanntmachung des Hinweises auf die Patenterteilung: **31.10.2018**
(21) Anmeldenummer: 12075130.0
(22) Anmeldetag: 19.11.2012
(51) Int. Cl.: C02F 103/42, C02F 1/00, C02F 1/50

(54) **Verfahren und Anordnung zur Hygienisierung von Wasser in einem Swimming-Pool-System oder Schwimm- bzw. Badebereich**
Method and arrangement for hygienisation of water in a swimming pool system or swimming or bathing area
Procédé et agencement pour désinfecter de l'eau dans un système de piscine ou une zone de natation ou de baignade

(30) Priorität: 21.11.2011 DE 202011108086 U
(43) Veröffentlichungstag der Anmeldung: 22.05.2013
(73) Patentinhaber: Bergmann Umwelttechnik GmbH, 09322 Penig (DE)
(72) Erfinder: Triller, Wolfgang, 12555 Berlin (DE); Bergmann, Martin, 09322 Penig (DE); Ilian, Jens, 01157 Dresden (DE)
(74) Vertreter: Müller, Wolfram Hubertus

(56) Entgegenhaltungen:
- WO-A1-2011/133186
- GB-A- 2 413 320
- US-A- 6 019 893
- US-B1- 6 224 779

## Beschreibung

Die Erfindung betrifft ein Verfahren und eine Anordnung zur Hygienisierung von Wasser in einem Swimming-Pool-System oder Schwimm- bzw. Badebereich, nachfolgend Badegewässer genannt.

Hygienisierung wird allgemein als zusätzliche oder weitergehende Reinigungsstufe im Rahmen der Wasser- oder Abwasserbehandlung aufgefasst und umfasst alle Verfahren der Desinfektion von Wasser bei denen im Ergebnis die Anforderungen für die Hygiene erfüllt werden.

Technische Verfahren zur Desinfektion von Wasser sind hinlänglich bekannt. Eine Klassifizierung der technischen Verfahren kann im Wesentlichen nach mechanischen, thermischen, chemischen oder physikalischen Verfahren vorgenommen werden.

Aus dem US-Patent US 6,224,779 B1 geht ein chemisches Verfahren zur Hemmung des Wachstums von Algen in einem Swimming-Pool-System hervor. Das im Pool befindliche Wasser mit einem pH-Wert von 7,0 bis 7,8 weist einen Chlorgehalt von 0,3 mg bis 5 mg pro Liter auf. In einem By-Pass-Kreislauf wird das Wasser des Swimming-Pool-Systems gefiltert und ihm Silberchlorid in einer solchen Konzentration zugesetzt, dass das Wasser im Pool eine Silberionen-Konzentration von 0,01 mg pro Liter aufweist.

Ein physikalisches Verfahren offenbart EP 1 606 220 B1 . Beschrieben wird eine Vorrichtung zur Desinfektion von Wasser durch ultraviolette Strahlung. Entlang der Fließrichtung des zu desinfizierenden Wassers sind dazu längsangeordnete UV-Lampen vorgesehen.

Die DE 20 2004 015 240 U1 beschreibt ein Fadensystem zur Installation in Trinkwassersystemen, bei dem die eine mehrdimensionale Struktur bildenden Fäden oligodynamische Metallanteile mit einer keimtötenden Wirkung aufweisen.

Die DE 20 2005 015 370 U1 offenbart eine Wasserdesinfektionsvorrichtung mit einer Diaphragmavorrichtung in Verbindung mit einer Enthärtungsanlage, einer Vorfiltereinheit und einem Inline-Statikmischer.

Desinfektionsmittel, insbesondere für Schwimmwasserbecken, beschreibt die DE 10 2005 059 135 A1. In getrennt voneinander angeordneten Einheiten werden dem Wasser nacheinander ein Schwermetall, ein Sauerstoff-abspaltendes Oxidationsmittel und ein Chlor freisetzendes Oxidationsmittel zugesetzt.

Einen Ozon-Generator zur chemischen Desinfektion von Wasser offenbart die DE 20 2008 017 943 U1. Mittels einer UV-Strahlung wird ein Fluid ozoniert, das in das zu desinfizierende Wasser zu dessen chemischen Desinfektion eingetragen wird.

Die US 6 019 893 A beschreibt ein Gerät zum Reinigen von Umlaufwasser eines Heilbades, das mittels einer Pumpe durch einen Kessel gedrückt wird, wobei das Gerät einen Filterkern aufweist ist und in seinem Gehäuse einen Träger mit aufgebrachten Silber zum Abtöten von Bakterien enthält.

Die GB 2 413 320 beschreibt eine Vorrichtung mit einem Reaktor und einem Pumpsystem zum Reinigen von Wasser mit einer Wirksamkeit gegen ein breites Spektrum von Bakterien. Zur desinfizierenden Wirkung enthält der Reaktor eine Edelmetall-Matrix bestehend aus Kupfer und Silber mit einem Silberanteil von nicht mehr als 10 %.

Die US 6 224 779 B1 beschreibt ein Verfahren zur Hemmung des Wachstums von Algen in einem Swimmingpoolsystem. Das Wasser wird durch einen Reaktor gepumpt, in dem eine Silberverbindung angeordnet ist und ein Chlor freisetzendes Mittel zugesetzt wird.

Aus der WO 2011/133186 A1 ist ein Heiz- und ein Reinigungssystem mit einem auswechselbaren Filterelement bekannt. Für das Filterelement sind Zeolithe, Aktivkohle, Silber basierende Verbindungen und feste Chlor oder Brom freisetzende Desinfektionsmittel vorgesehen. Bestandteil des Reinigungssystems ist des Weiteren ein Ozon-Generator.

Die letztgenannten technischen Lösungen erfordern meistens den Einsatz Sauerstoff freisetzender Verbindungen bzw. geringe Halogenkonzentrationen. Des Weiteren verbindet sich mit diesen Lösungen das Problem, dass eine nachhaltige Desinfektionswirkung nicht gewährleistet ist. Die Oberflächen der zur Desinfektion eingesetzten Materialien können sich im Betrieb mit Deckschichten und Biofilmen belegen und so eine kontrollierte und anhaltende Freisetzung des zur Desinfektion erforderlichen Silbers behindern, wenn nicht sogar unmöglich machen.

Der Erfindung liegt die Aufgabe zu Grunde, unter Verzicht auf eine Dosierung von chemischen Desinfektionsmitteln auf Chlor- oder Ozonbasiseine einfach handhabbare und kostengünstig herstellbare Anordnung zur Hygienisierung von Wasser in einem Badegewässer und ein Verfahren dazu bereitzustellen.

Erfindungsgemäß wird die Aufgabe durch ein Verfahren zur Hygienisierung von Wasser in einem Swimming-Pool-System oder einem Schwimm- oder Badebereich mit den Merkmalen des Patentanspruchs 1 sowie eine Anordnung zur Hygienisierung von Wasser in einem Swimming-Pool-System oder einem Schwimm- oder Badebereich mit den Merkmalen des Patentanspruchs 4 gelöst.

Ausgestaltungen der Erfindung sind in den abhängigen Ansprüchen angegeben.

Mit der Erfindung verbindet sich der Vorzug, dass die Hygienisierung ohne den Zusatz von Chemikalien erfolgt und die Anordnung durch den Nutzer des Badegewässers einfach zu handhaben und auch ohne besondere Mühe zu warten ist.

Darüber hinaus hat die Erfindung den Vorzug, dass vorhandene Badegewässer problemlos nachgerüstet werden können.

Nach einer besonderen Ausführungsform der Erfindung ist der Reaktor rohrförmig oder kastenprofilmäßig ausgebildet.

Im Folgenden soll die Erfindung an Hand von Zeichnungen näher erläutert werden. Es zeigen:
Fig. 1: die prinzipielle Darstellung einer innerhalb eines Badegewässers vorgesehenen erfindungsgemäßen Anordnung mit einem vertikal positionierten Reaktor im Schnitt;
Fig. 2: die prinzipielle Darstellung einer außerhalb eines Badegewässers vorgesehenen erfindungsgemäßen Anordnung;
Fig. 3: in einem Diagramm die Abhängigkeit der in das zu hygienisierende Wasser eingetragenen Silberkonzentration von der Leerrohrgeschwindigkeit und Verweilzeit bei einem außerhalb des Badegewässers angeordneten Reaktor;
Fig. 4: in einem Diagramm die Zunahme der Silberkonzentration in einem Badegewässer in der Inbetriebnahmephase in Abhängigkeit von der Zeit;
Fig. 5: in einem Diagramm die Silberkonzentration in einem Badegewässer bei laufendem Betrieb des Verfahrens über einem Zeitraum von 7 Wochen.

Versuche haben gezeigt, dass die Hygienisierung von Wasser eines Badegewässers bereits bei einer freien Silberkonzentration im Spurenbereich von < 0,1 mg/L gewährleistet wird.

Hierbei erzielen gelöste Silberionen eine starke antimikrobielle Wirkung. Als Zielkonzentration wird mit der vorliegenden Erfindung eine Konzentration von 10 µg/L bis 100 µg/L im Badegewässer angestrebt.

Ermöglicht wird der gewünschte Eintrag an Silberionen durch die Dimensionierung des Reaktors, der aktiven Oberfläche des mit Silber beschichteten Materials und die Auslegung der Verfahrensführung bezogen auf das Volumen des zu hygienisierenden Wassers. Entsprechend dem Volumen des Badegewässers und der Art und Intensität seiner Nutzung werden der jeweils dafür geeignete Reaktor mit dem mit Silber beschichteten Material und die notwendige Technik, wie beispielsweise der Verdichter bzw. die Pumpe, zum Betrieb des Reaktors ausgewählt. Der Anwender erhält zugleich die für den Betrieb der Anordnung, insbesondere für den Eintrag der notwendigen Silberkonzentration, erforderlichen Einstellungen zur Verfahrensführung.

Während bei einer Ausführung des Verfahrens und der Anordnung nach a) die Vorgabe für den notwendigen Druckluftvolumenstrom durch die Auswahl eines entsprechenden Verdichters erfolgt, werden für eine Ausführung des Verfahrens und der Anordnung nach b) dem Anwender Vorgaben zur Einstellung des benötigten Volumenstroms durch den Reaktor gegeben. Für die Regulierung des Volumenstroms ist der Reaktor mit steuerbaren Ventilen ausgestattet.

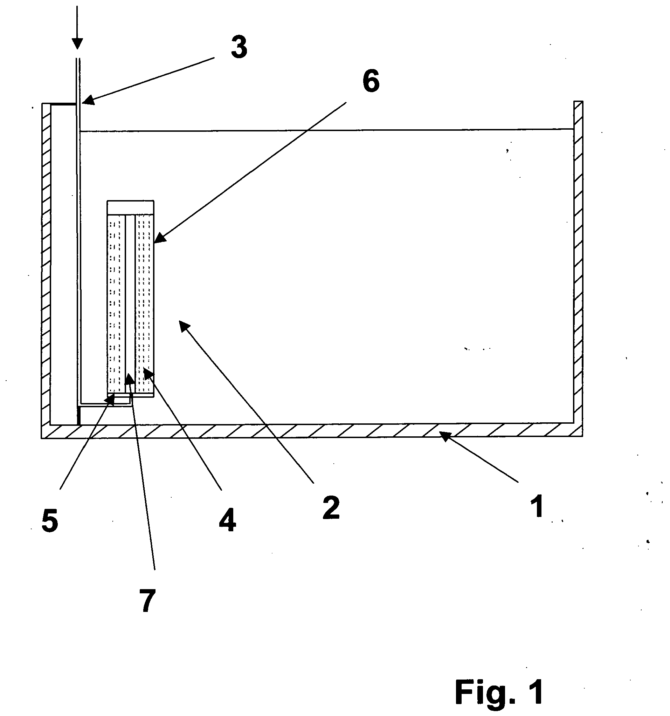

**Fig. 1** zeigt das Becken 1 eines Badegewässers mit einem darin angeordneten rohrförmigen Reaktor 2. Das Becken 1 ist mit ca. 50 m³ Wasser gefüllt bei einer Wassertiefe von ca. 1,25 m.
Im Reaktor 2, der einen Durchmesser von 300 mm aufweist, ist das aus einem Polyester bestehende und mit Silber beschichtete mattenartige Geflecht 4 in den Abmessungen 750 mm x 1500 mm schneckenförmig um den Belüfter 7 angeordnet. Mittels der Druckluftzuführung 3 wird Luft mit 0,7 m³/h über den Belüfter 7 in den Reaktor 2 eingetragen. Die Leistung des hier eingesetzten feinblasigen Belüfters 7 ist so eingestellt, dass die Verweilzeit des Wassers im Reaktor 2 bei einer Leerrohrgeschwindigkeit von 10 m/h ca. 5,5 Minuten beträgt. Der Reaktor 2 ist mit einem Abstand von ca. 150 mm über dem Grund des Beckens 1 angeordnet und auf diesem - hier nicht dargestellt - abgestützt. Die Druckluftzuführung 3 ist an der Seitenwand und am Grund des Beckens 1 befestigt. Bei Betrieb der Anordnung verdrängt die in den Reaktor 2 eintretende Druckluft das darin befindliche Wasser und lässt durch die Eintrittsfläche 5 im unteren Bereich des Reaktors 2 kontinuierlich Wasser nachströmen und so mit dem im Reaktor 2 befindlichen mattenartigen Geflecht, Gewirk oder Gewebe in Kontakt treten.
Die Eintrittsseite des vertikal oder horizontal angeordneten Reaktors kann an seiner Belüftungsseite kreisförmig ausgebildet sein oder die Schnittfläche eines Kastenprofiles aufweisen und eine Größe von 0,002 m² bis 0,2 m², vorzugsweise von 0,07 m², für ein Wasservolumen von 50 m³ besitzen.

Als mattenartiges Geflecht oder Gewirk kann ein aus mit Silber metallisierten Filamenten oder Fasern bestehendes Geflecht oder Gewirk gemäß DE 10 2006 055 763 B1, DE 10 2007 027 632 A1 oder WO 2009/065924 A1 eingesetzt werden.

Um einen "Wellness-Effekt" zu erzeugen kann der Reaktor 2 auch unter einer im Becken 1 vorgesehenen Sitz- oder Liegemöglichkeit horizontal angeordnet werden. Die Wandung 6 des Reaktors 2 ist für diesen Zweck siebartig ausgebildet oder mit Schlitzen oder Bohrungen versehen. Durch eine regelbare unterhalb oder seitlich am Belüfter angeordnete Druckluftzuführung und/oder den Einsatz des feinblasigen Belüfters 7 kann der gewünschte "Wellness-Effekt" zusätzlich entsprechend den jeweiligen Bedürfnissen eingestellt werden.

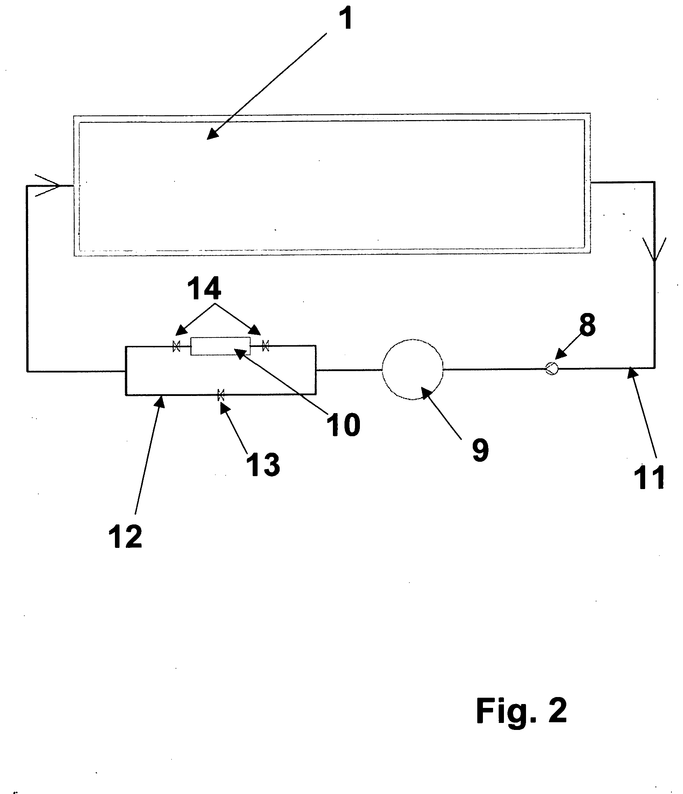

**Fig. 2** zeigt eine außerhalb eines Badegewässers vorgesehene erfindungsgemäße Anordnung, mit der das Wasser des Badegewässers mit dem Becken 1 mit ca. 50 m³ Wasservolumen hygienisiert wird. Aus dem Auslaufbereich des Beckens 1 wird das zu hygienisierende Wasser mittels der Pumpe 8 durch den Bypass 11 zunächst der Filtereinrichtung 9 zugeführt, der in Strömungsrichtung der Reaktor 10 nachgeordnet ist. Als Filtereinrichtung 9 kommt ein konventioneller Schnellfilter bestehend aus einem mit Kies gefüllten Druckbehälter zum Einsatz. Das gefilterte Wasser kann direkt dem Reaktor 10 zugeführt werden. Zur besseren Steuerung der Hygienisierung kann der Reaktor 10 - wie es die **Fig. 2** zeigt - auch in einem Bypass 12 im Ablauf der Filtereinrichtung 9 installiert werden. Mittels der Ventile 13 und 14 können bei der hier vorliegenden Zwangsdurchströmung die Leerrohrgeschwindigkeit und Verweilzeit des zu hygienisierenden Wassers im Reaktor 10 wie erforderlich eingestellt werden.
Das zu hygienisierende Wasser kann sowohl als reine Wasserphase oder in einer als Wasser-Luft-Phase zwangsweise durch den Reaktor 10 geleitet werden. Zu letzterem Zweck ist in dieser Anordnung ein Belüfter installiert.

Der Reaktor 10 weist in seiner Ausführung einen Durchmesser von 200 mm und eine Länge von ca. 1000 mm auf. Im Inneren des Reaktors 10 ist ein aus einem Polyester bestehendes und mit Silber beschichtetes mattenartiges Geflecht in den Abmessungen 750 mm x 1500 mm schneckenförmig um den Belüfter angeordnet. Die gewünschte Leerrohrgeschwindigkeit für den Reaktor 10 beträgt ca. 12 m/h und ermöglicht eine Verweilzeit von ca. 5 min im Inneren des Reaktors 10. Vor der Inbetriebnahme der Anordnung wird die Strömungsgeschwindigkeit durch Auslitern des Bypasses 12 eingestellt. Um den Reaktor 10 warten zu können, werden die im Zu- und Ablauf des Reaktors 10 vorgesehenen Ventile 14 geschlossen. Das den Reaktor 10 verlassende Wasser wird zusammen mit dem Hauptstrom in das Becken 1 des Badegewässers zurückgeleitet. Die eingetragene Silberkonzentration führt in der Folge zur gewünschten Verbesserung des hygienischen Zustands des Badegewässers.

Von besonderer Bedeutung für die Auslegung der Reaktoren 2 und 10 ist, dass die erforderliche Größe der Kontaktfläche des mit Silber beschichteten oder aus Silber bestehenden mattenartigen Geflechts, Gewirks oder Gewebes gesichert wird. Hierbei kann entweder ein Material mit einer verhältnismäßig großen offenporigen Struktur Anwendung finden oder mittels Abstandshaltern zwischen den einzelnen Lagen des eingesetzten Materials eine große aktive Oberfläche gesichert werden.

Sowohl bei der Anordnung gemäß **Fig. 1** als auch bei der Anordnung gemäß **Fig. 2** ist die Einstellung optimaler Strömungsverhältnisse in den Reaktoren 2 und 10 von besonderer Bedeutung. Bei einer zu hohen Leerrohrgeschwindigkeit ist die Verweilzeit im Reaktor 2, 10 zu gering um Silberionen in Lösung zu bringen. Ist die Leerrohrgeschwindigkeit zu gering, ist der Volumenstrom zum Badegewässer zu niedrig, um die im Badegewässer benötigte Zielkonzentration an Silberionen zu gewährleisten.

Die eingesetzte Oberfläche des mit Silber beschichteten oder aus Silber bestehenden mattenartigen Geflechts, Gewirks oder Gewebes ist auf die Einsatzdauer des Reaktors 2, 10 ausgelegt und stellt den Vorrat bzw. ein Depot an Silber für diesen Zeitraum sicher. Es ist daher Aufgabe, bei der Auslegung des Reaktors 2; 10 dafür zu sorgen, dass über die Einstellung der Leerrohrgeschwindigkeit und der Verweilzeit die für die Hygienisierung und im gewollten Zeitraum optimale Menge an Silber abgegeben wird.

Wenn das für ein bestimmtes Wasservolumen zur Gewährleistung der Hygienisierung für einen vordefinierten Zeitraum ausgelegte und mit Silber beschichtete mattenartige Geflecht, Gewirk oder Gewebe nicht eingesetzt werden soll, sondern ein derartiges Material ohne Definition von dessen "Lebensdauer" eingesetzt wird, ist es vorteilhaft, die Konzentration an Silberionen mit einem Sensor bekannter Art zu überwachen. Wird in einem solchen Fall die benötigte Zielkonzentration an freien Silberionen nicht erreicht, wird der durch den Reaktor 2, 10 geleitete Volumenstrom automatisch angepasst. Zu diesem Zweck ist die erfindungsgemäße Anordnung mit einer Steuereinheit für den Belüfter 7 bzw. die Pumpe 8 sowie entsprechenden Ventilen ausgestattet. Kann die Zielkonzentration über einen definierten Zeitraum nicht erreicht werden, erhält der Nutzer eine Fehlermeldung, die ein Signal zum Austausch der Matten bzw. ein Hinweis zur Beauftragung eines Wartungsbetriebes zur Feststellung der Ursache der Fehlermeldung sein kann.

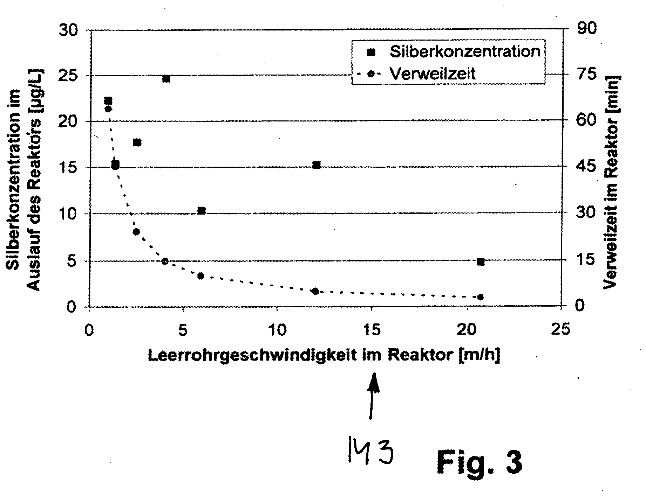

Aus **Fig. 3** geht hervor, dass die Silberabgabe des Reaktors von dessen Leerrohrgeschwindigkeit und der Verweilzeit des den Reaktor durchströmenden Mediums abhängig ist. Im durchgeführten Versuch konnte bei einer Leerrohrgeschwindigkeit von 12 m/h und einer Verweilzeit von 5 min eine Silberkonzentration von 15 µg/L im Ablauf des Reaktors ermittelt werden. Die Dimensionierung des Reaktors entsprach dabei dem in **Fig. 2** beschriebenen Aufbau.

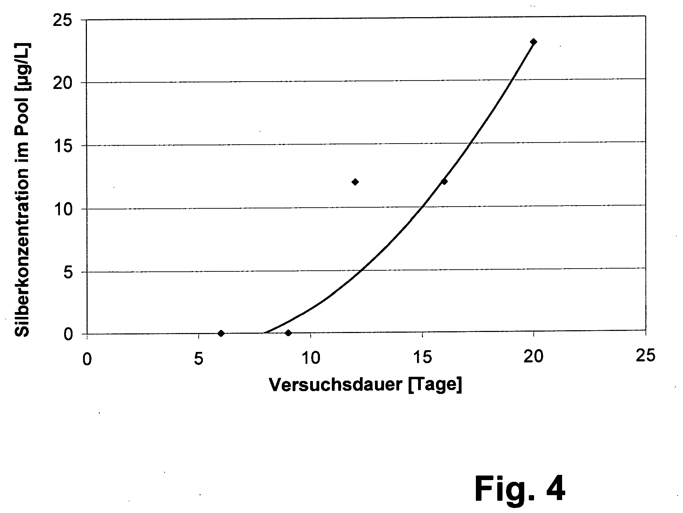

**Fig. 4** zeigt die Zunahme der Silberkonzentration in der Anlaufphase einer in einem Badegewässer installierten erfindungsgemäßen Anordnung entsprechend des in **Fig. 1** beschriebenen Aufbaus in einem Wasservolumen von 50 m³. Bereits nach ca. 3 Wochen wurde eine Silberkonzentration von ca. 25 µg/L erreicht.

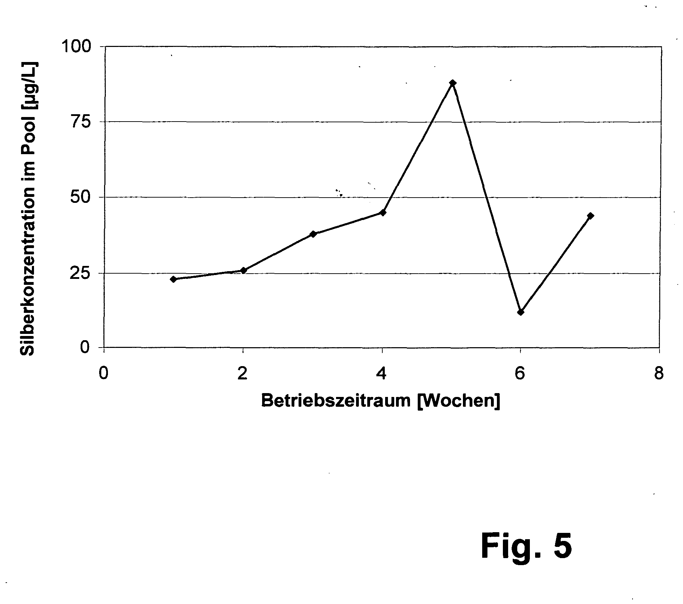

Mit **Fig. 5** zeigt, dass bei laufendem Betrieb einer erfindungsgemäßen Anordnung entsprechend des in **Fig. 1** beschriebenen Aufbaus in einem Badegewässer mit einem Wasservolumen von 50 m³ über einen Zeitraum von 7 Wochen die Silberkonzentration über der Zielkonzentration von 10 µg/ L gehalten wurde.

## Patentansprüche

1. Verfahren zur Hygienisierung von Wasser in einem Swimming-Pool-System oder einem Schwimm- oder Badebereich unter Verwendung eines Reaktors (2; 10), wobei im Reaktor (2, 10) ein mit Silber beschichtetes oder aus Silber bestehendes mattenartiges Geflecht, Gewirk oder Gewebe (4) vorgesehen ist, **dadurch gekennzeichnet, dass** das zu hygienisierende Wasser
- unter Einsatz eines fein- oder grobblasigen Belüfters (7) mindestens durch einen Reaktor (2) geleitet wird, der im Becken (1) des Swimming-Pool-Systems oder des Schwimm- oder Badebereiches installiert ist,
oder
- mittels einer Pumpe (8) und eines Belüfters mindestens durch einen Reaktor (10) geleitet wird, der in einem Bypass (11) zum Becken (1) des Swimming-Pool-Systems oder des Schwimm- oder Badebereiches angeordnet ist,
- wobei das den Reaktor (2; 10) durchströmende und zu hygienisierende Wasser mittels des Belüfters (7) mit dem im Reaktor (2; 10) angeordneten und mit Silber beschichteten oder aus Silber bestehenden mattenartigen Geflecht, Gewirk oder Gewebe (4) in Kontakt gebracht wird, und
- wobei das zu hygienisierende Wasser mit einer Verweilzeit von 5 bis 30 Minuten durch den Reaktor (2; 10) geleitet wird.

2. Verfahren nach Anspruch 1, **dadurch gekennzeichnet, dass** der Reaktor (2; 10) an seiner Belüftungsseite beziehungsweise seiner Eintrittsfläche (5) mit einer Querschnittsfläche von 0,002 m² bis 0,2 m², vorzugsweise von 0,07 m², für ein Wasservolumen von 50 m³ versehen wird.

3. Verfahren nach Anspruch 1 oder 2, **dadurch gekennzeichnet, dass** in Abhängigkeit von der im Badegewässer mittels eines Sensors überwachten Konzentration an freien Silberionen im Verhältnis zu einer vorgegebenen Zielkonzentration an Silberionen die Leistung des Belüfters (7) und/oder der Pumpe (8) zur Veränderung des Volumenstromes gesteuert oder ein Signal für das Vorliegen einer Havarie gegeben wird.

4. Anordnung zur Hygienisierung von Wasser in einem Swimming-Pool-System oder einem Schwimm- oder Badebereich, mit einem Reaktor (2; 10), in dem ein mit Silber beschichtetes oder aus Silber bestehendes mattenartiges Geflecht, Gewirk oder Gewebe (4) angeordnet ist, **gekennzeichnet durch**
- mindestens einen im Becken (1) des Swimming-Pool-Systems oder des Schwimm- oder Badebereiches installierten Reaktor (2) und einen fein- oder grobblasigen Belüfter (7), wobei der mit einer Druckluftzuführung (3) verbundene Belüfter (7) das zu hygienisierende Wasser den Reaktor (2) durchströmend mit dem mattenartigen Geflecht, Gewirk oder Gewebe (4) in Kontakt bringt,
oder
- mindestens einen außerhalb des Beckens (1) des Swimming-Pool-Systems oder des Schwimm- oder Badebereiches installierten Reaktor (10), wobei der Reaktor mittels eines Bypasses (11) mit dem Becken (1) verbunden und mittels einer Pumpe (8) und eines Belüfters zwangsweise durchströmt ist und so das zu hygienisierende Wasser mit dem mattenartigen Geflecht, Gewirk oder Gewebe (4) in Kontakt gebracht ist.

5. Anordnung nach Anspruch 4, **dadurch gekennzeichnet, dass** der Reaktor (2) im Becken (1) des Swimming-Pool-Systems oder des Schwimm- oder Badebereiches installiert ist und der Belüfter (7) innerhalb des Reaktors (2) vorgesehen ist.

6. Anordnung nach Anspruch 5, **dadurch gekennzeichnet, dass** die Eintrittsseite (5) des Reaktors (2) an seiner Belüftungsseite einen kreisförmigen Querschnitt oder die Schnittfläche des Kastenprofiles aufweist und eine Größe von 0,002 m² bis 0,2 m², vorzugsweise von 0,07 m², für ein Wasservolumen von 50 m³ besitzt.

7. Anordnung nach einem der Ansprüche 4 bis 6, **dadurch gekennzeichnet, dass** der Reaktor (2; 10) rohrförmig oder kastenprofilmäßig ausgebildet ist.

8. Anordnung nach einem der Ansprüche 4 bis 7, **dadurch gekennzeichnet, dass** die Wandung (6) des Reaktors (2) mit Schlitzen oder Bohrungen versehen ist.

9. Anordnung nach Anspruch 8, **dadurch gekennzeichnet, dass** die Wandung (6) des Reaktors (2) siebartig ausgebildet ist.

10. Anordnung nach einem der Ansprüche 4 bis 9, **dadurch gekennzeichnet, dass** die Leistung des Belüfters (7) oder der Pumpe (8) so gewählt ist, dass die Verweilzeit des zu hygienisierenden Wassers im Reaktor (2; 10) 5 bis 30 Minuten beträgt.

11. Anordnung nach einem der Ansprüche 4 bis 10, **dadurch gekennzeichnet, dass** das mattenartige Geflecht, Gewirk oder Gewebe (4) gewickelt oder gefaltet im Reaktor (2;10) positioniert ist.

12. Anordnung nach Anspruch 11, **dadurch gekennzeichnet, dass** das mattenartige Geflecht, Gewirk oder Gewebe (4) unter Verwendung von Distanzhaltern positioniert ist.

13. Anordnung nach einem der Ansprüche 4 bis 12, **dadurch gekennzeichnet, dass** das mattenartige Geflecht, Gewirk oder Gewebe (4) bahnenförmig um den Belüfter (7) gewickelt ist, wobei die Bahnen bei Verwendung von Gewebe mittels Abstandshalten eine Distanz zueinander aufweisen.

14. Anordnung nach einem der Ansprüche 4 bis 13, **dadurch gekennzeichnet, dass** das mattenartige Geflecht, Gewirk oder Gewebe (4) ein aus Kupfer, einem Polymer oder einem Textil bestehendes jeweils mit Silber beschichtetes Geflecht, Gewirk oder Gewebe von Filamenten oder Fasern ist.

## Claims

1. Method for sanitizing water in a swimming pool system or a swimming or bathing area by using a reactor (2; 10), with a mat-like mesh, knitted or woven fabric (4) coated or consisting of silver being provided in the reactor (2, 100), **characterized in that** the water to be sanitized
- is passed at least through a reactor (2), which is installed in the basin (1) of the swimming pool system or of the swimming or bathing area, by using a fine- or coarse-bubble aerator (7),
or
- is passed at least through a reactor (10), which is arranged in a bypass (11) of the basin (1) of the swimming pool system or of the swimming or bathing area, by means of a pump (8) and an aerator,
- the water that flows through the reactor (2; 10) and is to be sanitized being brought into contact with the mat-like mesh, knitted or woven fabric (4) coated or consisting of silver arranged in the reactor (2; 10) by means of the aerator (7), and
- the water that is to be sanitized being directed through the reactor (2; 10) with a residence time of 5 to 30 minutes.

2. Method according to Claim 1, **characterized in that** the reactor (2; 10) is provided on its aeration side or its inlet surface (5) with a cross-sectional area of 0.002 m² to 0.2 m², preferably of 0.07 m², for a volume of water of 50 m³.

3. Method according to Claim 1 or 2, **characterized in that** the output of the aerator (7) and/or of the pump (8) is controlled in dependence on the concentration of free silver ions in the bathing water, monitored by means of a sensor, in relation to a prescribed target concentration of silver ions for adjusting the volumetric flow, or a signal that there is a malfunction is issued.

4. Arrangement for sanitizing water in a swimming pool system or a swimming or bathing area, with a reactor (2; 10), in which a mat-like mesh, knitted or woven fabric (4) coated or consisting of silver is arranged, **characterized by**
- at least one reactor (2) installed in the basin (1) of the swimming pool system or of the swimming or bathing area and a fine- or coarse-bubble aerator (7), the aerator (7), which is connected to a compressed air supply (3), bringing the water that is to be sanitized into contact with the mat-like mesh, knitted or woven fabric (4) while it is flowing through the reactor (2),
or
- at least one reactor (10) installed outside the basin (3) of the swimming pool system or of the swimming or bathing area, the reactor being connected to the basin (1) by means of a bypass (11) and having the water that is to be sanitized made to flow through it by means of a pump (8) and an aerator and thereby brought into contact with the mat-like mesh, knitted or woven fabric (4).

5. Arrangement according to Claim 4, **characterized in that** the reactor (2) is installed in the basin (1) of the swimming pool system or of the swimming or bathing area and the aerator (7) is provided inside the reactor (2).

6. Arrangement according to Claim 5, **characterized in that** the inlet side (5) of the reactor (2) has on its aeration side a circular cross section or the sectional area of a box profile and has a size of 0.002 m² to 0.2 m², preferably of 0.07 m², for a volume of water of 50 m³.

7. Arrangement according to one of Claims 4 to 6, **characterized in that** the reactor (2; 10) is formed as tubular or in the manner of a box profile.

8. Arrangement according to one of Claims 4 to 7, **characterized in that** the wall (6) of the reactor (2) is provided with slits or bores.

9. Arrangement according to Claim 8, **characterized in that** the wall (6) of the reactor (2) is formed in the manner of a strainer.

10. Arrangement according to one of Claims 4 to 9, **characterized in that** the output of the aerator (7) or of the pump (8) is chosen such that the residence time in the reactor (2; 10) of the water to be sanitized is 5 to 30 minutes.

11. Arrangement according to one of Claims 4 to 10, **characterized in that** the mat-like mesh, knitted or woven fabric (4) is positioned in the reactor (2; 10) in a wound or pleated form.

12. Arrangement according to Claim 11, **characterized in that** the mat-like mesh, knitted or woven fabric (4) is positioned by using spacers.

13. Arrangement according to one of Claims 4 to 12, **characterized in that** the mat-like mesh, knitted or woven fabric (4) is wound around the aerator (7) in the form of strips, the strips being kept at a distance from one another by means of spacers when woven fabric is used.

14. Arrangement according to one of Claims 4 to 13, **characterized in that** the mat-like mesh, knitted or woven fabric (4) is a mesh, knitted or woven fabric comprising filaments or fibres consisting of copper, a polymer or a textile, in each case coated with silver.

## Revendications

1. Procédé d'hygiénisation d'eau dans un système de bassin de natation ou dans une zone de natation et de bain, par recours à un réacteur (2; 10), un treillis, un tricot ou un tissu (4), de type matelas, revêtus d'argent ou constitués d'argent, étant prévus dans le réacteur (2, 10),
**caractérisé en ce que** l'eau à hygiéniser
est conduite dans au moins un réacteur (2) installé dans le bassin (1) du système de bassin de natation ou de la zone de natation ou de bain en recourant à un aérateur (7) formant des bulles fines ou grossières, ou
est conduite dans le ou les réacteurs (10) au moyen d'une pompe (8) et d'un aérateur, le réacteur étant disposé dans une dérivation (11) conduisant au bassin (1) du système de bassin de natation ou de la zone de natation ou de bain,
**en ce que** l'eau à hygiéniser qui traverse le réacteur (2; 10) est mise en contact au moyen de l'aérateur (7) avec le treillis, le tricot ou le tissu (4) de type matelas, revêtus d'argent ou constitués d'argent disposés dans le réacteur et
**en ce que** l'eau à hygiéniser est conduite dans le réacteur (2; 10) pendant un temps de séjour de 5 à 30 minutes.

2. Procédé selon la revendication 1, **caractérisé en ce que** le réacteur (2; 10) est doté sur son côté de ventilation ou sur sa surface d'entrée (5) d'une section transversale d'une superficie de 0,002 m² à 0,2 m² et de préférence de 0,07 m² pour un volume d'eau de 50 m³.

3. Procédé selon les revendications 1 ou 2, **caractérisé en ce qu'**en fonction de la concentration, surveillée au moyen d'un capteur, d'ions argent libres dans l'eau du bain par rapport à une concentration cible prédéterminée en ions argent, la puissance de l'aérateur (7) et/ou de la pompe (8) est commandée de manière à modifier le débit volumique ou un signal indiquant la présence d'une avarie est délivré.

4. Ensemble d'hygiénisation d'eau dans un système de bassin de natation ou dans une zone de natation et de bain, l'ensemble présentant un réacteur (2; 10) dans lequel sont prévus un treillis, un tricot ou un tissu (4) de type matelas, revêtus d'argent ou constitués d'argent,
**caractérisé par**
au moins un réacteur (2) installé dans le bassin (1) du système de bassin de natation ou de la zone de natation et de bain et un aérateur (7) formant des bulles fines ou grossières, l'aérateur (7) relié à une amenée (3) d'air sous pression mettant en contact l'eau à hygiéniser qui traverse le réacteur (2) avec le treillis, le tricot ou le tissu (4) de type matelas ou
par au moins un réacteur (10) installé à l'extérieur du bassin (1) du système de bassin de natation ou de la zone de natation et de bain, le réacteur étant relié au bassin (1) au moyen d'une dérivation (11) et étant traversé de manière forcée au moyen d'une pompe (8) et d'un aérateur, l'eau à hygiéniser étant ainsi amenée en contact avec le treillis, le tricot ou le tissu (4) de type matelas.

5. Ensemble selon la revendication 4, **caractérisé en ce que** le réacteur (2) est installé dans le bassin (1) du système de bassin de natation ou de la zone de natation et de bain et l'aérateur (7) est prévu à l'intérieur du réacteur (2).

6. Ensemble selon la revendication 5, **caractérisé en ce que** sur son côté d'aération, le côté d'entrée (5) du réacteur (2) présente une section transversale de forme circulaire ou la surface de coupe d'un profil en caisson et une taille 0,002 m² à 0,2 m² et de préférence de 0,07 m² pour un volume d'eau de 50 m³.

7. Ensemble selon l'une des revendications 4 à 6, **caractérisé en ce que** le réacteur (2; 10) a une forme tubulaire ou un profil en caisson.

8. Ensemble selon l'une des revendications 4 à 7, **caractérisé en ce que** la paroi (6) du réacteur (2) est dotée de fentes ou d'alésages.

9. Ensemble selon la revendication 8, **caractérisé en ce que** la paroi (6) du réacteur (2) a la forme d'un tamis.

10. Agencement selon l'une des revendications 4 à 9, **caractérisé en ce que** la puissance de l'aérateur (7) ou de la pompe (8) est sélectionnée de telle sorte que le temps de séjour de l'eau à hygiéniser dans le réacteur (2; 10) soit de 5 à 30 minutes.

11. Agencement selon l'une des revendications 4 à 10, **caractérisé en ce que** le treillis, le tricot ou le tissu (4) en forme de matelas sont placés dans le réacteur (2; 10) en étant enroulés ou pliés.

12. Ensemble selon la revendication 11, **caractérisé en ce que** le treillis, le tricot ou le tissu (4) en forme de matelas, revêtus d'argent ou constitués d'argent, sont positionnés en recourant à des écarteurs.

13. Agencement selon l'une des revendications 4 à 12, **caractérisé en ce que** le treillis, le tricot ou le tissu (4) en forme de matelas, revêtus d'argent ou constitués d'argent sont enroulés en forme de bande autour de l'aérateur (7), les bandes présentant un écart mutuel obtenu au moyen d'écarteurs lorsque l'on utilise des tissus.

14. Agencement selon l'une des revendications 4 à 13, **caractérisé en ce que** le treillis, le tricot ou le tissu (4) en forme de matelas, revêtus d'argent ou constitués d'argent sont un treillis, un tricot ou un tissu de filaments ou de fibres en cuivre, en polymère ou en textile, revêtus d'argent.
